# EUROPEAN PATENT APPLICATION

(11) **EP 4 246 331 A1**
(43) Date of publication of application: **20.09.2023**
(21) Application number: 22171680.6
(22) Date of filing: 04.05.2022
(51) Int. Cl.: G06F 11/30, G06F 8/71

(54) **METHOD AND SYSTEM FOR DETERMINING OPTIMAL EVENT LOG SET FOR EVALUATING BEHAVIOUR OF SOFTWARE-BASED SYSTEMS**

(30) Priority: 19.03.2022 IN 202241015272
(71) Applicant: Wipro Limited, 560 035 Karnataka (IN)
(72) Inventor: GUPTA, Vijayendra Kumar, 560048 Bangalore (IN); VENKATARAMANASASTRY, Anatharam, 560048 Bangalore (IN)
(74) Representative: Finnegan Europe LLP

(57) **Abstract**

Disclosed subject matter relates to field of debugging in software-based systems. In the present disclosure an event log filtering system, initially identifies input configuration and previous set of optimal event logs of previous version of software-based system. Further, the event log filtering system identifies a new set of event logs generated for a current version of the software-based system. Upon identification, additional set of event logs are determined based on comparison of new set of event logs and the previous set of optimal. Thereafter, an updated set of filters for the current version of the software-based system based on the additional set of event logs and the previous set of filters is determined. Finally, an optimal set of event logs for the new version of the software-based system is determined based on the updated set of filters for evaluating behaviour of the current version of the software-based system.

## Description

### Technical Field

The present subject matter relates generally to the field of Debugging in software-based systems, and more particularly, but not exclusively to a method and a system for determining optimal event log set for evaluating behaviour of the software-based systems.

### Background

In software-based systems, debugging is a process of detecting and removing existing and potential errors in a software that can cause it to behave unexpectedly or crash. Software is developed by human and thus fault and error can occur in code especially in early days of deployment which needs to be fixed. Thus, in order to deal with the errors and to timely fix the errors, logging code instrumented in software generates run time event logs, which helps engineers to debug the issues found in the software. Event logs play critical role in understanding the software behaviour and identifying the issues usually stored in log files that contains information about usage and operations of operating systems, applications or devices and other system specific details.

Debugging and fault finding in the software-based system is always associated with certain logs including, but not limited to, crash dump, external events, and internal events recorded/logged by instrumented code in the software. Logs can be either structured logs (for example, syslog), a predefined detail (for example, crash dump) or a holistic execution record of the automated system like instruction trace. Structured / execution record are predefined and provide the details based on predefined specification. Automated system usually provides structured, semi-structured or unstructured logs. Semi-structured or un-structured logs are added as instrumented code to trace intermediate state of event/objects in software during the execution. However, there is no system or method to validate the completeness or correctness of these event logs and hence such event logs can only be analyzed by development engineers, thereby, lacking any further potential to automate the debugging of the software.

Therefore, there is no mechanism to ensure that the provided event logs for debugging the software are sufficient to help debugging in all possible software use cases. Though logging is a critical element in debugging and faultfinding, there are no ways to validate the logs for their completeness, correctness for a given error reported or any predictable error in system. In software-based system, event logging is open-ended item as there is no well-defined bounds for event logging. Also, there is lack of a mechanism that can handle high volume of unstructured and filter out misleading logs to identify minimal set of event logs for the purpose of describing the software program behavior.

Some of the existing techniques provide a method for early filtering of events using a kernel-based filter. A driver for the kernel level matches events occurred at the kernel level to predefined rules. Upon finding a match, based on the predefined rules, the events are filtered like allowing or disallowing the said event for further processing. In this existing technique, the events are matched with predefined rules, based on which the events are filtered. However the existing technique lacks the mechanism for validating the event logs or even filtering out irrelevant event logs related to all the generated events.

Currently, for event logging there is no well-defined systems or method to validate the completeness or correctness of these event logs and hence such logs can only be analyzed by development engineers, thus, lacking any further potential to automate the debugging of the software.

The information disclosed in this background of the disclosure section is only for enhancement of understanding of the general background of the disclosure and should not be taken as an acknowledgement or any form of suggestion that this information forms prior art already known to a person skilled in the art.

### Summary

Disclosed herein is a method of determining an optimal set of event logs for evaluating behaviour of software-based systems during testing and debugging of incrementally developed software. The method includes identifying, by an event log filtering system an input configuration of a previous version of a software-based system and a previous set of optimal event logs of the previous version of the software-based system. The input configuration includes external or internal event triggers and a previous set of filters. Further, the method include, identifying a new set of event logs generated for a current version of the software-based system based on the input configuration provided to the previous version of the software-based system. Upon identifying the new set of event logs, the method includes determining an additional set of event logs based on comparison of the new set of event logs and the previous set of optimal event logs. Further, the method includes determining an updated set of filters for the current version of the software-based system based on the additional set of event logs and the previous set of filters. Finally, the method includes determining an optimal set of event logs for the new version of the software-based system based on the updated set of filters for evaluating behaviour of the current version of the software-based system.

Further, the present disclosure includes an event log filtering system for determining an optimal set of event logs for evaluating behaviour of the software-based systems during testing and debugging of incrementally developed software. The event log filtering system includes a processor and a memory communicatively coupled to the processor. The memory stores the processor-executable instructions, which, on execution, causes the processor to identify an input configuration of a previous version of a software-based system and a previous set of optimal event logs of the previous version of the software-based system. The input configuration includes external or internal event triggers and a previous set of filters. Further, the processor identifies a new set of event logs generated for a current version of the software-based system, based on the input configuration provided to the previous version of software-based system. Upon identification of the new set of event logs, the processor determines an additional set of event logs based on comparison of the new set of event logs and the previous set of optimal event logs. Further, the processor determines an updated set of filters for the current version of the software-based system, based on the additional set of event logs and the previous set of filters. Finally, the processor determines an optimal set of event logs for the new version of the software-based system based on the updated set of filters for evaluating behaviour of the current version of the software-based system.

Furthermore, the present disclosure comprises a non-transitory computer readable medium including instructions stored thereon that when processed by at least one processor causes an event log filtering system to determine an optimal set of event logs for evaluating behaviour of software-based systems during testing and debugging of incrementally developed software. The instructions cause the processor to identify an input configuration of a previous version of a software-based system and a previous set of optimal event logs of the previous version of the software-based system. The input configuration includes external or internal event triggers and a previous set of filters. Further, the instructions cause the processor to identify a new set of event logs generated for a current version of the software-based system based on the input configuration provided to the previous version of the software-based system. Upon identifying the new set of event logs, the instructions cause the processor to determine an additional set of event logs based on comparison of the new set of event logs and the previous set of optimal event logs. Further, the instructions cause the processor to determine an updated set of filters for the current version of the software-based system based on the additional set of event logs and the previous set of filters. Finally, the instructions cause the processor to determine an optimal set of event logs for the new version of the software-based system based on the updated set of filters for evaluating behaviour of the current version of the software-based system.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of The Accompanying Diagrams

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG. 1** shows an exemplary architecture for determining an optimal set of event logs for evaluating behaviour of software-based systems during testing and debugging of incrementally developed software in accordance with some embodiments of the present disclosure.
**FIG. 2A** shows a detailed block diagram of an event log filtering system for determining an optimal set of event logs for evaluating behaviour of software-based systems during testing and debugging of incrementally developed software in accordance with some embodiments of the present disclosure.
**FIG. 2B** shows a pictorial representation of an event log and its attributes in accordance with some embodiments of the present disclosure.
**FIG. 3** shows a flowchart illustrating a method of determining an optimal set of event logs for evaluating behaviour of software-based systems during testing and debugging of incrementally developed software in accordance with some embodiments of the present disclosure; and
**FIG. 4** is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

In the present document, the word "exemplary" is used herein to mean "serving as an example, instance, or illustration." Any embodiment or implementation of the present subject matter described herein as "exemplary" is not necessarily be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

The terms "comprises", "comprising", "includes" or any other variations thereof, are intended to cover a non-exclusive inclusion, such that a setup, device or method that includes a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and a system for determining an optimal set of event logs for evaluating behaviour of software-based systems during testing and debugging of incrementally developed software. Initially consider a software based system whose behaviour needs to be analysed based on testing. This may require logging events related data at the backend based on occurrence of one or more events. An event log filtering system of the present disclosure may receive events that are logged while debugging the software based system. The event log filtering system may determine optimal set of event logs required for a given software based system for a given scenario. As an example, if the scenario is to detect memory leak, the event log filtering system may determine optimal set of event logs required for such detection. For determining the optimal set of event logs, the event log filtering system may initially consider an input configuration of a previous version of the software-based system and a previous set of optimal event logs of the previous version of the software-based system. The input configuration may include, but not limited to, external or internal triggers and a previous set of filters. In some embodiments, the event log filtering system may identify the input configuration and the previous set of optimal event logs from a data repository associated with the event log filtering system. Further, the event log filtering system may identify a new set of event logs for the current version of the software-based system based on the input configuration of the previous version of the software-based system. In some embodiments, the current version of the software-based system may be an upgraded software, feature enhancement in a software, version change and the like, when compared to the previous version of the software-based system. Upon identifying the new set of event logs generated for the current version, an additional set of event logs is determined. The additional set of event logs is generated by comparing the previous set of optimal event logs and the new set of event logs. The additional set of event logs may be a set of logs which were not present in the previous set of optimal event logs but may be present in the new set of event logs generated for the current version of the software-based system. Further, the event log filtering system may determine an updated set of filters for the current version of the software-based system based on the additional set of event logs and the previous set of filters. In some embodiments, the updated set of filters for the current version of the software based system may be determined by performing at least one of, combining an additional set of new filters with previous set of filters, removal of one or more filters from the previous set of filters or replacing one or more filters of the previous set of filters with one or more filters of the additional set of new filters. In some embodiments, the event log filtering system may determine the additional set of new filters by analysing the additional set of event logs and one or more attributes associated with additional set of event logs. Finally, the event log filtering system may determine an optimal set of event logs for the new version of the software-based system based on the updated set of filters for evaluating the behaviour of the current version of the software-based system. The optimal set of event logs may be generated by ranking the new set of event logs based on at least one of a system specific scenario and attributes associated with the updated set of filters. Also, an optimal set of event logs may be determined based on the updated set of filters for evaluating behaviour of the current version of the software based system.

The event log filtering system of the present disclosure tracks the unstructured logs and enhances the unstructured logs by a filtering mechanism to reach the equivalence of the structured logs. The event log filtering system may be trained by using training set of event logs and also with each iteration of the event log filtering system, it self learns based on the results, feedback and inputs received from subject matter experts. This in turn enables the event log filtering system of the present disclosure to analyse and optimize the amount of unstructured logs in the software-based system that in turn eliminates the need for intervention of subject matter experts during event logging process. The optimal set of event logs determined for each scenario of the software-based system in the present disclosure ensures optimal logging system which helps a developer to quickly resolve the issues. The present disclosure provides enables using the optimal set of event logs as the quantifiable measure to check the credibility and quality of the software-based system while comparing different software based systems. Unstructured logging has no well-defined lower bounds. In the present disclosure, the data repository may be associated with an Artificial Intelligence or Machine learning (AI/ML) engine to perform the analytics on the event logs and provide the feedback to event log filter system, thereby creating and learning the filters in the system automatically. The present disclosure suggests how to get an optimal event log set to define the behaviour of software. In other words, the present disclosure may determine a pattern validation of the set of event logs by creating a pattern as an optimal set for describing the behaviour of the system-software.

A description of an embodiment with several components in communication with each other does not imply that all such components are required. On the contrary, a variety of optional components are described to illustrate the wide variety of possible embodiments of the disclosure.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

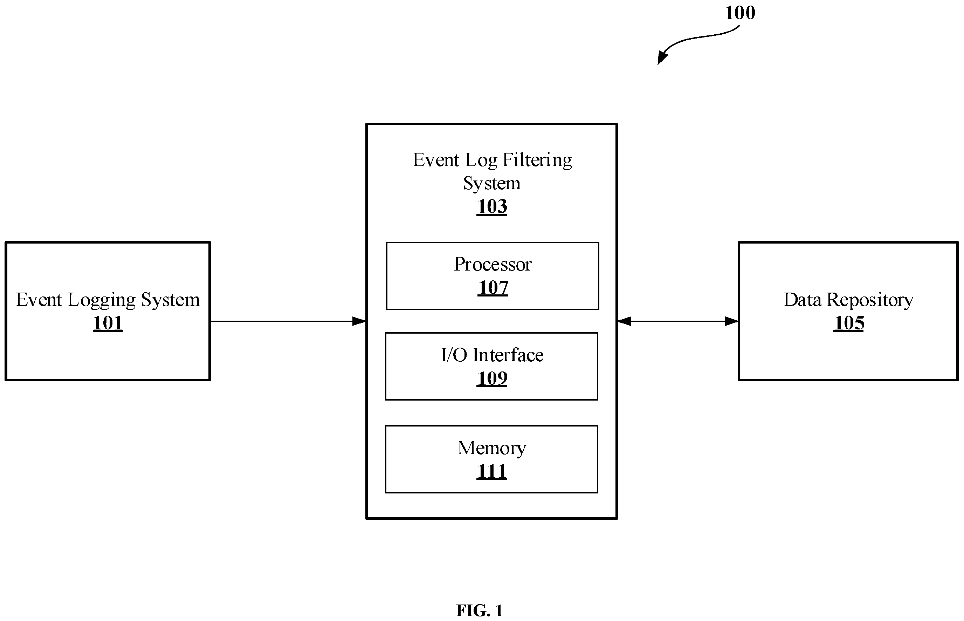

FIG. 1 shows an exemplary architecture for determining an optimal set of event logs for evaluating behaviour of software-based systems during testing and debugging of incrementally developed software in accordance with some embodiments of the present disclosure.

The architecture 100 includes an event logging system 101, an event log filtering system 103, and a data repository 105. In some embodiments, the event logging system 101 may collect one or more events generated in the software-based system and generate a human readable event description commonly known as event logs. All the event logs of the software-based system are logged in the event logging system 101. The event logging system 101 may provide the one or more event logs collected to an event log filtering system 103 associated with the event logging system 101, for generating an optimal set of event logs by filtering out erroneous logs, spurious logs, incomplete logs, irrelevant logs and so on. The event logging system 101 may transmit the one or more events logs to the event log filtering system 103 using a wired or wireless communication network (Not shown in FIG. 1). In some embodiments, the event-log filtering system 103 may be one of a stand-alone system, a distributed system, a networked system or a cloud-based system. In an implementation where the event log filtering system 103 may be a networked or cloud-based system, individual components communicatively connected to each other to form the event log filtering system 103 may be polled for the event logs and also may have the capability to provide the event logs as dictated by the event log filtering system 103. In another embodiment, the event log filtering system 103 may be integrated with either CI/CD systems. In yet another embodiment, the event log filtering system 103 may provide both online or offline capability for fault finding and performing corrective measures to a centralized controller associated with the event log filtering system 103.

In some embodiments, the event log filtering system 103 may include, a processor 107, an Input/Output (I/O) interface 109 and a memory 111. The I/O interface 109 may be configured to receive one or more new event logs from the event logging system 101 and one or more previous set of optimal event logs and the input configuration of a previous version of the software-based system from the data repository 105 associated with the event log filtering system 103. In some embodiments, the input configuration of the previous version of the software-based system may include, but not limited to, external or internal triggers and a previous set of filters. In some embodiments, the data repository 105 may store the one or more external or the internal triggers, the previous set of optimal event logs and the previous set of filters and the like, each time an optimal set of event logs is determined. In some embodiments, the data repository 105 may be configured within the event log filtering system 103 or it may be associated with the event log filtering system 103 as shown in FIG. 1. The processor 107 may initially identify the input configuration and the previous set of optimal event logs from the data repository 105. Further the processor 107 may identify the new set of event logs of the current version of the software-based version which is received from the event logging system 101. Upon identification, the processor 107 may determine the additional set of event logs among the new set of event logs based on comparison of the new set of event logs and the previous set of optimal event logs. Further, the processor 107 may determine the updated set of filters based on the additional set of event logs and the previous set of filters. Thereafter, the processor 107 may determine the optimal set of event logs based on the updated set of filters for evaluating the behavior of the current version of the software-based version.

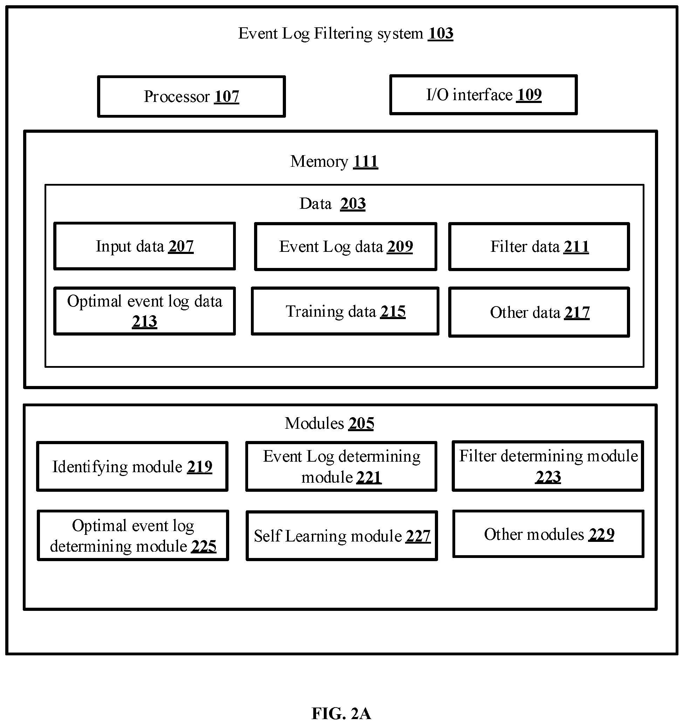

FIG. 2A shows a detailed block diagram of an event log filtering system for determining an optimal set of event logs for evaluating behaviour of software-based systems during testing and debugging of incrementally developed software in accordance with some embodiments of the present disclosure.

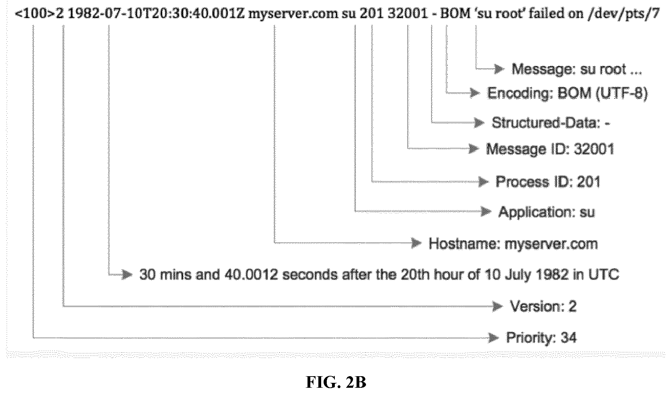

In some implementations, the event log filtering system 103 may include data 203 and modules 205. As an example, the data 203 is stored in a memory 111 configured in the event log filtering system 103 as shown in the FIG. 2. In one embodiment, the data 203 may include input data 207, event log data 209, filter data 211, optimal event log data 213, training data 215 and other data 217. In the illustrated FIG. 2A, modules 205 are described herein in detail.

In some embodiments, the data 203 may be stored in the memory 111 in form of various data structures. Additionally, the data 203 can be organized using data models, such as relational or hierarchical data models. The other data 217 may store data, including temporary data and temporary files, generated by the modules 205 for performing the various functions of the event log filtering system 103.

In an embodiment, the input data 207 may include the inputs received by the event log filtering system 103 for evaluating the behaviour of the current version of the software-based system. The event log filtering system 103 may initially identify the input configuration of the previous version of the software-based system which may be retrieved from a data repository 105 associated with the event log filtering system 103. The input configuration may include, but not limited to the external or internal triggers and the previous set of filters. As an example, the external triggers may be triggered based on a key stroke on a computing device such as a notebook computer, various configurations and traffic entering a port in case of 5G-core UPF, and the like. In some embodiments, the internal triggers may be generated in the event log filtering system 103 and distributed and processed by various modules of the event log filtering system 103. Internal triggers are primarily dependent on software design and implementation choices, as external world logs generated by the software-based systems are only way to get insight of a working software-based systems. As an example, event logs may include syslog, debug logs, and the like that help in visualizing the software-based systems. An exemplary representation of the Syslog can be visualized as shown in the reference link: https://datatracker.ietf.org/doc/html/rfc5424#page-8.

Further, debug logs may help in tracking and resolving the issue and is the primary focus of the present disclosure. In some embodiments, debug logs are unstructured and not standardised logs that are primarily dependent on system design and implementation.

In some embodiments, the internal triggers or external triggers may include, but not limited to the external/internal events occurring in response to some software or hardware events or any manual /external system attached to it. In some embodiments, the input configuration of the previous version of the software-based system stored as the input data 207 may also include a previous set of filters.

Further, the input data 207 may include a previous set of optimal event logs identified and retrieved by the event log filtering system 103 from the data repository 105. In some embodiments, previous set of optimal event logs may be optimal set of event logs generated for the previous version of the software-based system. In some embodiments, the event logs may be of different categories that may include, but not limited to, platform independent logs and platform dependent logs. The platform independent logs may capture a behaviour that is available across a platform where the software is executing. Similarly, the platform dependent logs may capture specific values and behaviour that are platform or hardware dependent.

In an embodiment, the event log data 209 may include new event logs generated for a current version of the software-based system. Consider a scenario where the previous version of the software-based system may be upgraded and undergoes a process of testing or debugging. In such cases, a new set of event logs may be generated for the current version (upgraded software) of the software-based system. In some embodiments, the new set of event logs may include the event logs which were determined to be the optimal set of event logs when testing/debugging the previous version of the software-based system and a set of event logs which may be logged currently due to the testing/debugging of the current version of the software-based system. The event log filtering system 103 may receive the new set of event logs as an input from an event logging system 101 associated with the event log filtering system 103.

In an embodiment, the filter data 211 may include an additional set of filters and updated set of filters of the current version of the software-based system. In some embodiments, the additional set of filters may be determined by analysing additional set of event logs and one or more attributes associated with the additional set of event logs. This aspect is explained in detail in the further section of the present disclosure. As an example, the filter data 211 may include, but not limited to, API log filters, Object lifecycle filters, Process lifecycle filters, platform specific filters, platform independent filters, Client/server filters, service level filters, time-based filters, scale filters, maskable filters, program code specific filters and test case based filters. An exemplary structure of a filter in JavaScript Object Notation (JSON):

```
       JSON record
       {
       "LOG_TYPE": "PI/PD", /∗ can be either platform dependent or independent ∗/
       "FILTER_ID": "0x1223344",
       "PLATFORM_TYPE": "HW/SW",
       "FILTER ATTRIBUTE": "JSON_OBJECT",
       "INPUT": "JSON _OBJECT",
       "OUTPUT": "JSON _OBJECT",
       "CONFIG: "JSON _OBJECT",
       }
```

In some embodiments, the JSON objects defined in the above structure may include useful filters identified to filter out spurious events.

In an embodiment, the optimal event log data 213 may include optimal set of event logs determined for the current version of the software-based system. In some embodiments, the optimal set of event logs may be a set of event logs that are necessary to understand the behaviour of the current version of the software-based system. The optimal set of event logs may be obtained by filtering out undesirable event logs that may include, but not limited to, irrelevant, redundant, erroneous, incomplete, misleading and spurious event logs.

In an embodiment, the training data 215, may include feedback and user input received during the determination of optimal set of event logs that are used for the process of self-learning. In some embodiments, each time based on the feedback and the user input, the event log filtering system 103 may learn and improve the analysis process that in turn improvises the determination of the optimal set of event logs in the upcoming testing/debugging process.

In some embodiments, the data 203 stored in the memory 111 may be processed by the modules 205 of the event log filtering system 103. The modules 205 may be stored within the memory 111. In an example, the modules 205 communicatively coupled to the processor 107 configured in the event log filtering system 103, may also be present outside the memory 111 as shown in FIG. 2A and implemented as hardware. As used herein, the term modules 205 may refer to an application specific integrated circuit (ASIC), an electronic circuit, a processor (shared, dedicated, or group) and memory that execute one or more software or firmware programs, a combinational logic circuit, and/or other suitable components that provide the described functionality.

In some embodiments, the modules 205 may include, for example, an identifying module 219, an event log determining module 221, a filter determining module 223, an optimal event log determining module 225, a self learning module 227, and other modules 229. The other modules 229 may be used to perform various miscellaneous functionalities of the event log filtering system 103. It will be appreciated that such aforementioned modules 205 may be represented as a single module or a combination of different modules.

In some embodiments, the identifying module 219 may identify the input configuration of the previous version of the software-based system and the previous set of optimal event logs. In some embodiments, the event log filtering system 103 may retrieve the input configuration of the previous version of the software-based system and the previous set of optimal event logs from the data repository 105. The input configuration of the software-based system may include, but not limited to the external or internal triggers and the previous set of filters. The internal or external trigger may include, but not limited to the external/internal events in response to some software or hardware events or any manual /external system attached to it. In some embodiments, the previous set of filters may refer to the filters applied for obtaining the previous set of optimal event logs. In the present disclosure, filters may be used to filter out event logs such as spurious event logs, irrelevant event logs, incomplete event logs, misleading event logs, erroneous event logs and redundant event logs, in order to provide an optimal set of event logs that are necessary to determine a behaviour of the software-based system. In some embodiments, the previous set of optimal event logs may be defined as the event logs that were determined to be adequate for determining the behaviour of the previous version of the software-based system. In some embodiments, event logs are human readable event description generated by an event logging system 101. FIG. 2B shows an exemplary event log and its corresponding attributes such as message, encoding type, message ID, process ID, Application, hostname, version, priority and the like.

The present disclosure is explained from a point when the event log filtering system 103 has already completed "n" number of runs for determining the optimal set of event logs for a software-based system. Therefore, the input configuration of the previous version of the software-based system and the previous set of optimal event logs refers to the input configuration used in the previous run for testing/debugging of the previous version of the software-based system, and the previous set of optimal event logs refers to the event logs that were determined to be adequate for determining the behaviour of the previous version of the software-based system. However, when the event log filtering system 103 is starting from the first run, the event log filtering system 103 may consider a statically preconfigured set of filters and external/internal triggers as input. Also, the event log filtering system 103 may consider the predefined set of event logs selected by a user as the previous set of optimal event logs. Therefore, with each subsequent run, the event log filtering system 103 may self-learn based on the previous runs and provide an updated set of optimal event logs by determining updated set of filters. In some embodiments, the process of determining updated set of filters is discussed in detail in the further sections.

Further, the identifying module 219 may identify a new set of event logs generated for the current version of the software-based system. In some embodiments, the event log filtering system 103 may receive the new set of logs from the event logging system 101 associated with the event log filtering system 103. In some embodiments, the new set of event logs are all the events logs that are generated while testing/debugging the current version of the software-based system. In some embodiments, the current version of the software-based system may be a result of software-upgrade to the previous version of the software-based system, feature enhancement to the previous version of the software-based system, or a version change of the software-based system.

In some embodiments, the event log determining module 221 may determine the additional set of events logs. In some embodiments, the event log determining module 221 may determine the additional set of events logs based on the previous set of optimal event logs and the new set of event logs. The event log determining module 221 may compare the previous set of the optimal event logs with the new set of event logs in order to determine the additional set of event logs that are logged while testing/debugging the current version of the software-based system, but not logged while testing/debugging the previous version of the software-based system. In some scenarios, there may be no additional set of event logs when the current version of the software-based system is tested/debugged. In some embodiments, the additional set of event logs may be stored as part of the event log data 209.

In some embodiments, when the additional set of event logs are determined for the current version of the software-based system, the filter determining module 223 may determine the an updated set of filters for the current version of the software-based system based on the additional set of event logs and the previous set of filters. In some embodiments, to determine the updated set of filters, the filter determining module 223 may analyse the additional set of event logs and one or more attributes associated with the additional set of event logs. As an example, the additional set of filters may be determined based on the attributes such as object lifecycle, time stamping, API, and hardware/software of the additional set of event logs. As an example, some of the attributes and the corresponding filters are as shown below:
1. API logs & API Log Filters
2. Object logs and object lifecycle filters such as Create, Read, Update, Delete (CRUD)
3. Module/thread/process life cycle & filters
4. Service Instance and service level filters
5. Event processing time and time based filters
6. Scaled event processing and scale filters
7. Maskable event logging and maskable filters
8. Code coverage and program execution graph filters and the like

Further, the filter determining module 223 may determine the updated set of filters for the current version of the software-based system based on the additional set of filters and the previous set of filters. In some embodiments, the updated set of filters may be obtained by performing at least one of, combining the additional set of new filters and the previous set of filters, removing of one or more filters from the previous set of filters or replacing the one or more filters of the previous set of filters with one or more filters of the additional set of new filters. In some embodiments, the additional set of new filters and updated set of filters may be stored as part of the filter data 211.

In some embodiments, the optimal event log determining module 225 may determine the optimal set of event logs. The optimal set of event logs may be determined based on the updated set of filters. To determine the optimal set of event logs, the optimal event log determining module 225 may initially rank the new set of event logs based on at least one of the system specific scenario and attributes associated with the updated set of filters. As an example, the system specific scenario may refer to whether the system is a standalone platform, a networked platform or a cloud-native platform. In some embodiments, the optimal event log determining module 225 may rank the new set of event logs by using one or more predefined ranking techniques. As an example, the one or more predefined ranking techniques may include, but not limited to, techniques known in the art. In some embodiments, optimal event log determining module 225 may perform ranking to identify event logs among the new set of event logs which are of least priority and accordingly eliminate such event logs. As an example, last "n" number of event logs among the ranked new set of event logs may be considered to be of least priority and eliminated or in other words filtered out. In some embodiments, ranking may be performed based on the updated set of filters, where the event logs may be selected based on different categories of the updated set of filters. As an example, platform specific filters may prioritize platform logs and the object lifecycle filters may prioritize for (Create, Retrieve, Update, Delete) CRUD logs. Therefore, the new set of event logs may be ranked by applying the updated set of filters, which ensures the presence of the event logs that are prioritized based on the updated set of filters and the elimination of rest of the event logs among the new set of event logs. As an example, when the CRUD filter is one of the updated filters, the CRUD filter may look for 4 stages of the object life cycle. However, there may be multiple updates to an object. In such cases the optimal event log determining module 225 may decide whether all the updates of an object should be a part of the optimal event log set. In such cases, the optimal event log determining module 225 may filter one or more undesirable event logs from the ranked new set of event logs based on the updated set of filters. The one or more undesirable event logs may include, but not limited to irrelevant, redundant, erroneous, incomplete, misleading and spurious event logs. Thereafter, the optimal event log determining module 225 may determine the event logs that are retained upon ranking and filtering of the new set of event logs, as the optimal set of event logs for the current version of the software-based system. In some embodiments, the optimal event log determining module 225 may determine a pattern validation of the set of event logs by creating a pattern as an optimal set for describing the behaviour of the system-software.

In some embodiments, the self learning module 227, may perform a self learning process by using results of the analysis of the optimal set of event logs and user input as training data. In some embodiments, the user input may be provided by subject matter experts such as software developers. In some embodiments, the self learning process may include training a machine learning model to perform analytics on at least one of the new set of event logs or the additional set of event logs for determining the updated set of filters for the current version of the software-based system. Based on the self-learning, the event log filtering system 103 may provide an improvised result while determining the optimal set of event logs during every subsequent run.

Henceforth, the process of determining an optimal set of event logs for evaluating behaviour of software-based systems during testing and debugging of incrementally developed software is explained with the help of one or more examples for better understanding of the present disclosure. However, the one or more examples should not be considered as limitation of the present disclosure.

Consider an exemplary scenario of configuring new routing protocol or adding or deleting a route sequence, for which the route add/delete sequence may be tested, and corresponding events may be analyzed for determining the optimal set of event logs. The exemplary scenario for the external/internal triggers, internal events, previous set of filters and the previous set of optimal event logs may be as shown in the **Table** 1 below.

**Table 1**

| **External Event Triggers** |
|---|
| 1. Configure new routing protocol (OSPF) |
| 2. Routed add caused by protocol packet exchange |
| 3. Traffic passed to interface |
| 4. Route delete |

| **Internal Events** |
|---|
| 1. Addition of prefix in prefix table |
| 2. Creation of next-hop structure and index in the table tailored to prefix and path. |
| 3. Creation of Adjacency data and index tailored to next hop structures; |
| 4. Download and distribute the Forwarding Information Base (FIB) (also known as a forwarding table or MAC table) to all the Forwarding engines. |

| **Previous Set of Filters** |
|---|
| Set of 3 filters - Allow all the logs for analysis, |
| F1 Init-Modules- Allow, |
| F2-CRUD -Deny |

| **Previous set of optimal event logs** |
|---|
| Feb 16 09:38:00:099500 event:Module Init RIP |
| Feb 16 09:38:00:099500 event:Module Init NextHop |
| Feb 16 09:38:00:099500 event:Module Init Adjacency |

In this scenario consider the previous version of software may be configured with only Routing Information Protocol (RIP) protocol and the current version of software may include the Open Shortest Path first (OSPF) protocols configured into it. The optimal set of event logs for the current version of the software-based system in this scenario may be determined in the following manner. In this scenario, initially the event log filtering system **103** may identify the input configuration of previous version of the software-based system and the previous set of optimal event logs. The input configuration of the previous version of the software-based system may include the external/ internal triggers and the previous set of filters as shown in the above **Table 1.** The external triggers in this scenario may be, but not limited to configuring new routing protocol like Open Shortest Path First (OSPF), addition of routes caused by protocol packet exchange, passing the traffic to the network interface for checking if the packets have reached the destination, and deletion of routes. Also, some of the internal events may be, but not limited to, addition of prefix in prefix table, creation of next-hop structure and index in the table tailored to prefix and path, creation of Adjacency data and index tailored to next hop structures and download and distribute the FIB to all the Forwarding engines. The previous set of filters for the previous version of the software-based system may include, but not limited to a set of 3 filters i.e. "Allow all logs for analysis", "F1 Init Modules - Allow" and "F2-CRUD - Allow". Also, the previous set of optimal event logs may be as shown in the Row 4 of **Table 1.** Further, the event log filtering system **103** identifies the new set of event logs as shown in the Row 2 of **Table 2** given below, generated for the current version of the software-based system, i.e. the new set of event logs may comprise the event logs generated with respect to the OSPF protocols along with the event logs of the RIP protocols.

**Table 2**

| **Previous set of optimal event logs** |
|---|
| Feb 16 09:38:00:099500 event:Module Init RIP |
| Feb 16 09:38:00:099500 event:Module Init NextHop |
| Feb 16 09:38:00:099500 event:Module Init Adjacency |
| Feb 16 09:46:30:110550 event:route _add event_src:RIP Context:0x10027 AFI:IPv4 |
| IP:80.2.62.0/24 Next-hop:0x31D00005 |
| Feb 16 09:46:30:110690 event:nexthop-create event_src:NHP Context:0x10027 Next-hop:0x31D00005 link-id:50001 Adjacency:0x7800001 |
| Feb 16 09:46:30:110690 event:adj-create event_src:ADJP Context:0x10027 |
| Adjacency:0x7800001 link-id:50001 encap data: [....] |
| Feb 16 09:49:30:110800 event:route_delete event_src:RIP Context:0x10027 AFI:IPv4 |
| IP:80.2.62.0/24 Next-hop:0x31D00005 |
| Feb 16 09:49:30:110850 event:nexthop-delete event_src:NHP Context:0x10027 Next-h0p:0x31D00005 link-id:50001 |
| Feb 16 09:49:30:110900 event:adj-delete event_src:ADJP Context:0x10027 |
| Adjacency:0x7800001 link-id:50001 |

| **New Set of Event logs** |
|---|
| Feb 16 09:50:00:099500 event:Module Init RIP |
| Feb 16 09:50:00:099500 event:Module Init OSPF |
| Feb 16 09:50:00:099500 event:Module Init NextHop |
| Feb 16 09:50:00:099500 event:Module Init Adjacency |
| Feb 16 09:56:30:110550 event:route _add event_src:RIP Context:0x10027 AFI:IPv4 |
| IP:80.2.62.0/24 Next-hop:0x31D00006 |
| Feb 16 09:50:30:110690 event:nexthop-create event_src:NHP Context:0x10027 Next-hop:0x31D00006 link-id:50001 Adjacency:0x7800001 |
| Feb 16 09:56:30:110690 event:adj-create event_src:ADJP Context:0x10027 |
| Adjacency:0x7800001 link-id:50001 encap data: [....] |
| Feb 16 09:56:30:110550 event:route _add event_src:OSPF Context:0x10027 AFI:IPv4 |
| IP:80.2.61.0/24 Next-hop:0x31D00007 |
| Feb 16 09:50:30:110690 event:nexthop-create event_src:NHP Context:0x10027 Next-hop:0x31D00007 link-id:50002 Adjacency:0x7800002 |
| Feb 16 09:56:30:110690 event:adj-create event_src:ADJP Context:0x10027 |
| Adjacency:0x7800002 link-id:50002 encap data: [....] |
| Feb 16 09:59:30:110800 event: route _delete event_src:RIP Context:0x10027 AFI:IPv4 |
| IP:80.2.62.0/24 Next-hop:0x31D00006 |
| Feb 16 09:59:30:110850 event:nexthop-delete event_src:NHP Context:0x10027 Next-hop:0x31D00006 link-id:50001 |
| Feb 16 09:59:30:110900 event:adj-delete event_src:ADJP Context:0x10027 |
| Adjacency:0x7800001 link-id:50001 |
| Feb 16 09:59:30:110910 route _delete event_src:OSPF Context:0x10027 AFI:IPv4 |
| IP:80.2.61.0/24 Next-hop:0x31D00007 |
| Feb 16 09:59:30:111050 event:nexthop-delete event_src:NHP Context:0x10027 Next-hop:0x31D00007 link-id:50002 |
| Feb 16 09:59:30:111100 event:adj-delete event_src:ADJP Context:0x10027 |
| Adjacency:0x7800002 link-id: 50002 |

| **Additional Set of Event logs determined based on comparison** |
|---|
| Feb 16 09:50:00:099500 event:Module Init OSPF |
| Feb 16 09:56:30:110550 event:route _add event_src:OSPF Context:0x10027 AFI:IPv4 |
| IP:80.2.61.0/24 Next-hop:0x31D00007 |
| Feb 16 09:59:30:110910 route _delete event_src:OSPF Context:0x10027 AFI:IPv4 |
| IP:80.2.61.0/24 Next-hop:0x31D00007 |

Based on the previous set of optimal event logs and the new set of event logs, the event log filtering system 103 determines the additional set of event logs. The additional set of event logs in this scenario may be, but not limited to the logs as shown in the Row 3 of table 2 provided above. Upon determination of the additional set of event logs, the event log filtering system 103 determines the updated set of filters for the current version of the software-based system based on the additional set of event logs and the previous set of filters. The event log filtering system **103** may determine the additional set of filters based on the attributes of the additional set of event logs. The additional set of filters in this scenario may be, but not limited to, Allow -OSPF logs. From the additional set of filters and the previous set of filters the updated set of filters are determined by the event log filtering system **103.** The updated set of filters may be, but not limited to, "Allow all logs for analysis", "F1 Init-Modules-Allow-RIP", "F2- Init-Modules-Allow-OSPF", "F2-CRUD-Allow RIP", and "F2-CRUD-Allow-OSPF". Finally, the event log filtering system **103** determines an optimal set of event logs upon ranking the new event logs, based on the updated set of filters. The optimal set of event logs in this scenario may include, but not limited to as shown in column 2 of **Table 3** given below.

**Table 3**

| **Ranking Parameters** | **Optimal set of event logs after filtering after using the new set of filters.** |
|---|---|
| Module ID = OSPF | Feb 16 09:50:00:099500 event:Module Init RIP |
| | Feb 16 09:50:00:099500 event:Module Init OSPF |
| | Feb 16 09:50:00:099500 event:Module Init NextHop |
| | Feb 16 09:50:00:099500 event:Module Init Adjacency |
| | Feb 16 09:56:30:110550 event:route _add event_src:RIP Context:0x10027 |
| | AFI:IPv4 IP:80.2.62.0/24 Next-hop:0x31D00006 |
| | Feb 16 09:50:30:110690 event:nexthop-create event_src:NHP |
| | Context:0x10027 Next-hop:0x31D00006 link-id:50001 |
| | Adj acency: 0x7800001 |
| | Feb 16 09:56:30:110690 event:adj-create event_src:ADJP |
| | Context:0x10027 Adjacency:0x7800001 link-id:50001 encap data: [....] |
| | Feb 16 09:56:30:110550 event:route _add event_src:OSPF |
| | Context:0x10027 AFI:IPv4 IP:80.2.61.0/24 Next-hop:0x31D00007 |
| | Feb 16 09:50:30:110690 event:nexthop-create event_src:NHP |
| | Context:0x10027 Next-hop:0x31D00007 link-id:50002 |
| | Adj acency: 0x7800002 |
| | Feb 16 09:56:30:110690 event:adj-create event_src:ADJP |
| | Context:0x10027 Adjacency:0x7800002 link-id:50002 encap data: [....] |
| | Feb 16 09:59:30:110800 event:route_delete event_src:RIP |
| | Context:0x10027 AFI:IPv4 IP:80.2.62.0/24 Next-hop:0x31D00006 |
| | Feb 16 09:59:30:110850 event:nexthop-delete event_src:NHP |
| | Context:0x10027 Next-hop:0x31D00006 link-id:50001 |
| | Feb 16 09:59:30:110900 event:adj-delete event_src:ADJP |
| | Context:0x10027 Adjacency:0x7800001 link-id:50001 |
| | Feb 16 09:59:30:110910 event: route_delete event_src:OSPF |
| | Context:0x10027 AFI:IPv4 IP:80.2.61.0/24 Next-hop:0x31D00007 |
| | Feb 16 09:59:30:111050 event:nexthop-delete event_src:NHP |
| | Context:0x10027 Next-hop:0x31D00007 link-id:50002 |
| | Feb 16 09:59:30:111100 event:adj-delete event_src:ADJP |
| | Context:0x10027 Adjacency:0x7800002 link-id:50002 |

Consider another exemplary scenario, where there is a memory leak in the software-based system. In this scenario the filters applied may be CRUD filter. The CRUD filter may be modified to ensure that only the creation and the deletion of objects must be logged to catch the memory leak in the software-based system. In this scenario, initially the event log filtering system **103** identifies the external/internal triggers, previous set of filters and the previous set of optimal logs for the previous version of the software-based system. That is the previous version of the software-based system may be a software-based system which was configured for only RIP protocol. The previous set of optimal event logs may be generated during the memory leak in the previous version of the software-based system. The external triggers and the internal events may be, but not limited to as shown in the row 1 and row 2 respectively of **Table 4** below.

**Table 4**

| **External Event Triggers** |
|---|
| 1. Configure new routing protocol (OSPF) |
| 2. Routed add caused by protocol packet exchange |
| 3) Traffic passed to interface |
| 4) Route delete |

| **Internal Events** |
|---|
| 1. Addition of prefix in prefix table |
| 2. Creation of next Hop structure and index in the table tailored to prefix and path. |
| 3. Creation of Adjacency data and index tailored to next hop structures; |
| 4. Download and distribute the FIB to all the Forwarding engines. |

| **Previous Set of Filters** |
|---|
| Set of 2 filters - |
| F2-CRUD -Allow only create and delete. |
| All other filters in the system - Deny. |

| **Previous set of optimal event logs** |
|---|
| Feb 16 09:46:30:110550 event:route _add event_src:RIP Context:0x10027 AFI:IPv4 |
| IP:80.2.62.0/24 Next-hop:0x31D00005 |
| Feb 16 09:46:30:110690 event:nexthop-create event_src:NHP Context:0x10027 Next-hop:0x31D00005 link-id:50001 Adjacency:0x7800001 |
| Feb 16 09:46:30:110690 event:adj-create event_src:ADJP Context:0x10027 |
| Adjacency:0x7800001 link-id:50001 encap data: [....] |
| Feb 16 09:49:30:110800 event:route_delete event_src:RIP Context:0x10027 AFI:IPv4 |
| IP:80.2.62.0/24 Next-hop:0x31D00005 |
| Feb 16 09:49:30:110850 event:nexthop-delete event_src:NHP Context:0x10027 Next-h0p:0x31D00005 link-id:50001 |
| Feb 16 09:49:30:110900 event:adj-delete event_src:ADJP Context:0x10027 |
| Adjacency:0x7800001 link-id:50001 |

The previous set of filters and the previous set of optimal event logs may be, but not limited to, as shown in row 3 and row 4 respectively of **Table 4.** Further the new set of event logs for the current version of the software-based system is identified by the event log filtering system **103.** The new set of event logs may be, but not limited to as shown in **Table 5** given below.

**Table 5**

| **Previous set of optimal event logs** |
|---|
| Feb 16 09:46:30:110550 event:route _add event_src:RIP Context:0x10027 AFI:IPv4 |
| IP:80.2.62.0/24 Next-hop:0x31D00005 |
| Feb 16 09:46:30:110690 event:nexthop-create event_src:NHP Context:0x10027 Next-hop:0x31D00005 link-id:50001 Adjacency:0x7800001 |
| Feb 16 09:46:30:110690 event:adj-create event_src:ADJP Context:0x10027 |
| Adjacency:0x7800001 link-id:50001 encap data: [....] |
| Feb 16 09:49:30:110800 event:route_delete event_src:RIP Context:0x10027 AFI:IPv4 |
| IP:80.2.62.0/24 Next-hop:0x31D00005 |
| Feb 16 09:49:30:110850 event:nexthop-delete event_src:NHP Context:0x10027 Next-h0p:0x31D00005 link-id:50001 |
| Feb 16 09:49:30:110900 event:adj-delete event_src:ADJP Context:0x10027 |
| Adjacency:0x7800001 link-id:50001 |

| **New Set of Event logs** |
|---|
| Feb 16 09:56:30:110550 event:route _add event_src:RIP Context:0x10027 AFI:IPv4 |
| IP:80.2.62.0/24 Next-hop:0x31D00006 |
| Feb 16 09:50:30:110690 event:nexthop-create event_src:NHP Context:0x10027 Next-hop:0x31D00006 link-id:50001 Adjacency:0x7800001 |
| Feb 16 09:56:30:110690 event:adj-create event_src:ADJP Context:0x10027 |
| Adjacency:0x7800001 link-id:50001 encap data: [....] |
| Feb 16 09:56:30:110550 event:route _add event_src:OSPF Context:0x10027 AFI:IPv4 |
| IP:80.2.61.0/24 Next-hop:0x31D00007 |
| Feb 16 09:50:30:110690 event:nexthop-create event_src:NHP Context:0x10027 Next-hop:0x31D00007 link-id:50002 Adjacency:0x7800002 |
| Feb 16 09:56:30:110690 event:adj-create event_src:ADJP Context:0x10027 |
| Adjacency:0x7800002 link-id:50002 encap data: [....] |
| Feb 16 09:59:30:110800 event:route_delete event_src:RIP Context:0x10027 AFI:IPv4 |
| IP:80.2.62.0/24 Next-hop:0x31D00006 |
| Feb 16 09:59:30:110850 event:nexthop-delete event_src:NHP Context:0x10027 Next-hop:0x31D00006 link-id:50001 |
| Feb 16 09:59:30:110900 event:adj-delete event_src:ADJP Context:0x10027 |
| Adjacency:0x7800001 link-id:50001 |
| Feb 16 09:59:30:110910 route _delete event_src:OSPF Context:0x10027 AFI:IPv4 |
| IP:80.2.61.0/24 Next-hop:0x31D00007 |
| Feb 16 09:59:30:111050 event:nexthop-delete event_src:NHP Context:0x10027 Next-hop:0x31D00007 link-id:50002 |
| Feb 16 09:59:30:111100 event:adj-delete event_src:ADJP Context:0x10027 |
| Adjacency:0x7800002 link-id: 50002 |

| **Additional Set of Event logs determined based on comparison** |
|---|
| Feb 16 09:56:30:110550 event:route _add event_src:OSPF Context:0x10027 AFI:IPv4 |
| IP:80.2.61.0/24 Next-hop:0x31D00007 |
| Feb 16 09:59:30:110910 route _delete event_src:OSPF Context:0x10027 AFI:IPv4 |
| IP:80.2.61.0/24 Next-hop:0x31D00007 |

Also, the additional set of event logs have been generated by comparing the new set of event logs and the previous set of optimal event logs, where the additional set of event logs in this scenario may be, but not limited to, as shown in Table 5, the additional set of evet logs in this scenario may include the addition or deletion of event logs with respect to the OSPF protocols. Moreover, the updated set of filters are determined based on the additional set of filters and previous set of filters. The additional set of filters are determined based on the additional set of event logs generated. Thus, the additional set of filters in this scenario may be the same CRUD filters which allows all the object lifecycle event logs related to addition or deletion of event logs, irrespective of which modules are generating the event logs. In this scenario, since the CRUD filter was already set for the RIP protocol in the previous set of filters, and in the current version of the software-based system, only the additional protocol in being added which needs the same CRUD filter to determine the memory leak, there is no change in the updated set of filters, and it remains the same as that of the previous set of filters. The event logs may have the same priority to be added in the existing logs. Finally, the optimal set of event logs is generated upon ranking the event logs and based on the updated set of filters. The optimal set of event logs generated may be, but not limited to as shown in column 2 of **Table 6** given below, the optimal set of event logs may include the event logs related to the addition or deletion of routes with respect to the OSPF protocols along with the previous set of optimal event logs. In this scenario, there is no change in the optimal set of event logs, as this is related to addition of event logs and it is allowed.

**Table 6**

| **Ranking Parameters** | **Optimal set of event logs after filtering after using the new set of filters.** |
|---|---|
| New logs ranked same priority as other objects generated by RIP modules | Feb 16 09:56:30:110550 event:route_add event_src:RIP Context:0x10027 AFI:IPv4 IP:80.2.62.0/24 Next-hop:0x31D00006 |
| Logs not present in the sets are ranked out as lower priority logs. (not shown here for clarity refer to init logs in previous test run) | Feb 16 09:50:30:110690 event:nexthop-create event_src:NHP |
| | Context:0x10027 Next-hop:0x31D00006 link-id:50001 |
| | Adjacency:0x7800001 |
| | Feb 16 09:56:30:110690 event:adj-create event_src:ADJP |
| | Context:0x10027 Adjacency:0x7800001 link-id:50001 encap |
| | data: [....] |
| | Feb 16 09:56:30:110550 event:route_add event_src:OSPF |
| | Context:0x10027 AFI:IPv4 IP:80.2.61.0/24 Next-hop:0x31D00007 |
| | Feb 16 09:50:30:110690 event:nexthop-create event_src:NHP |
| | Context:0x10027 Next-hop:0x31D00007 link-id:50002 |
| | Adj acency: 0x7800002 |
| | Feb 16 09:56:30:110690 event:adj-create event_src:ADJP |
| | Context:0x10027 Adjacency:0x7800002 link-id:50002 encap |
| | data: [....] |
| | Feb 16 09:59:30:110800 event:route_delete event_src:RIP |
| | Context:0x10027 AFI:IPv4 IP:80.2.62.0/24 Next-hop:0x31D00006 |
| | Feb 16 09:59:30:110850 event:nexthop-delete event_src:NHP |
| | Context:0x10027 Next-hop:0x31D00006 link-id:50001 |
| | Feb 16 09:59:30:110900 event:adj-delete event_src:ADJP |
| | Context:0x10027 Adjacency:0x7800001 link-id:50001 |
| | Feb 16 09:59:30:110910 route_delete event_src:OSPF |
| | Context:0x10027 AFI:IPv4 IP:80.2.61.0/24 Next-hop:0x31D00007 |
| | Feb 16 09:59:30:111050 event:nexthop-delete event_src:NHP |
| | Context:0x10027 Next-hop:0x31D00007 link-id:50002 |
| | Feb 16 09:59:30:111100 event:adj-delete event_src:ADJP |
| | Context:0x10027 Adjacency:0x7800002 link-id:50002 |

In another exemplary scenario, consider a situation where there may be a race condition in the software-based system. During the race conditions, the CRUD filter may be modified to ensure that event logs for all the stages of object lifecycle that is (CREATE, RETRIEVE, UPDATE AND DELETE) must be logged and all other logs may be filtered out. Initially in this scenario, the event log filtering system **103** identifies the external/internal triggers, previous set of filters and the previous set of optimal logs for the previous version of the software-based system. That is the previous version of the software-based system may be a software-based system which was configured for only RIP protocol. The previous set of optimal event logs may be generated during the race condition in the previous version of the software-based system. The external triggers and the internal events may be, but not limited to as shown in the row 1 and row 2 respectively of **Table 7** given below.

**Table 7**

| **External Event Triggers** |
|---|
| 1. Configure new routing protocol (OSPF) |
| 2. Routed add caused by protocol packet exchange |
| 3. Traffic passed to interface |
| 4. Route delete |

| **Internal Events** |
|---|
| 1. Addition of prefix in prefix table |
| 2. Creation of next Hop structure and index in the table tailored to prefix and path. |
| 3. Creation of Adjacency data and index tailored to next hop structures; |
| 4. Download and distribute the FIB to all the Forwarding engines. |

| **Previous Set of Filters** |
|---|
| CRUD -allow only create, delete and update |

| **Previous set of optimal event logs** |
|---|
| Feb 16 09:46:30:110550 event:route _add event_src:RIP Context:0x10027 AFI:IPv4 |
| IP:80.2.62.0/24 Next-hop:0x31D00005 |
| Feb 16 09:46:30:110690 event:nexthop-create event_src:NHPContext:0x10027 Next-hop:0x31D00005 link-id:50001 Adjacency:0x7800001 |
| Feb 16 09:46:30:110690 event:adj-create event_src:ADJP Context:0x10027 |
| Adjacency:0x7800001 link-id:50001 encap data: [....] |
| Feb 16 09:46:30:110700 event:nexthop-update event_src:NHP Context:0x10027 Next-hop:0x31D00005 link-id:50002 Adjacency:0x7800002 |
| Feb 16 09:46:30:110800 event:route_delete event_src:RIP Context:0x10027 AFI:IPv4 |
| IP:80.2.61.0/24 Next-hop:0x31D00005 |
| Feb 16 09:46:30:110850 event:nexthop-delete event_src:NHP Context:0x10027 Next-h0p:0x31D00005 link-id:50001 |
| Feb 16 09:46:30:110900 event:adj-delete event_src:ADJP Context:0x10027 |
| event_src:ADJPAdjacency:0x7800001 link-id:50001 |

The previous set of filters and the previous set of optimal event logs may be, but not limited to as shown in row 3 and row 4 respectively of **Table 7.** The previous set of filters may be, but not limited to, "CRUD-allow only create, delete and update". Further the new set of event logs for the current version of the software-based system is identified by the event log filtering system **103.** The new set of event logs may be, but not limited to, as shown in row 2 of **Table 8** given below.

**Table 8**

| **Previous set of optimal event logs** |
|---|
| Feb 16 09:46:30:110550 event:route _add Context:0x10027 AFI:IPv4 IP:80.2.62.0/24 Next-hop:0x31D00006 |
| Feb 16 09:46:30:110669 event:route _add Context:0x10027 AFI:IPv4 IP:80.2.61.0/24 Next-hop:0x31D00005 |
| Feb 16 09:46:30:110690 event:nexthop-create Context:0x10027 Next-hop:0x31D00005 link-id:50001 Adjacency:Ox7800001 |
| Feb 16 09:46:30:110690 event:adj-create Context:0x10027 Adjacency:0x7800001 link-id:50001 encap data: [....] |
| Feb 16 09:46:30:110700 event:nexthop-update Context:0x10027 Next-hop:0x31D00005 link-id: 50002 Adj acency: 0x7800002 |
| Feb 16 09:46:30:110800 event:route_delete Context:0x10027 AFI:IPv4 IP:80.2.61.0/24 Next-hop:0x31D00005 |
| Feb 16 09:46:30:110850 event:nexthop-delete Context:0x10027 Next-hop:0x31D00005 link-id:50001 |
| Feb 16 09:46:30:110900 event:adj-delete Context:0x10027 Adjacency:0x7800001 link-id:50001 |

| **New Set of Event logs** |
|---|
| Feb 16 09:56:30:110550 event:route _add event_src:RIP Context:0x10027 AFI:IPv4 IP:80.2.62.0/24 Next-hop:0x31D00006 |
| Feb 16 09:50:30:110690 event:nexthop-create event_src:NHP Context:0x10027 Next-hop:0x31D00006 link-id:50001 Adjacency:0x7800001 |
| Feb 16 09:56:30:110695 event:adj-create event_src:ADJP Context:0x10027 |
| Adjacency:0x7800001 link-id:50001 encap data: [....] |
| Feb 16 09:46:30:110700 event:nexthop-update event_src:NHP Context:0x10027 Next-hop:0x31D00006 link-id:50002 Adjacency:0x7800002 |
| Feb 16 09:56:30:110550 event:route _add event_src:OSPF Context:0x10027 AFI:IPv4 |
| IP:80.2.61.0/24 Next-hop:0x31D00007 |
| Feb 16 09:50:00:110660 event:kernel-tipc tipc: Lost Up <1.1.6:ethSw0-1.1.4:ethSw0> on network plane A |
| Feb 16 09:50:30:110690 event:nexthop-create event_src:NHP Context:0x10027 Next-hop:0x31D00007 link-id:50003 Adjacency:0x7800003 |
| Feb 16 09:56:30:110690 event:adj-create event_src:ADJP Context:0x10027 |
| Adjacency:0x7800003 link-id:50003 encap data: [....] |
| Feb 16 09:46:30:110700 event:nexthop-update event_src:NHP Context:0x10027 Next-hop:0x31D00007 link-id:50004 Adjacency:0x7800004 |
| Feb 16 09:59:30:110800 event:route_delete event_src:RIP Context:0x10027 AFI:IPv4 |
| IP:80.2.62.0/24 Next-hop:0x31D00006 |
| Feb 16 09:59:30:110850 event:nexthop-delete event_src:NHP Context:0x10027 Next-hop:0x31D00006 link-id:50002 |
| Feb 16 09:59:30:110900 event:adj-delete event_src:ADJP Context:0x10027 |
| Adjacency:0x7800002 link-id: 50002 |
| Feb 16 09:59:30:110910 event:route_delete event_src:OSPF Context:0x10027 AFI:IPv4 |
| IP:80.2.61.0/24 Next-hop:0x31D00007 |
| Feb 16 09:59:30:111050 event:nexthop-delete event_src:NHP Context:0x10027 Next-hop:0x31D00007 link-id:50004 |
| Feb 16 09:59:30:111100 event:adj-delete event_src:ADJP Context:0x10027 |
| Adjacency:0x7800004 link-id:50004 |

| **Additional Set of Event logs determined based on comparison** |
|---|
| Feb 16 09:56:30:110550 event:route _add event_src:OSPF Context:0x10027 AFI:IPv4 |
| IP:80.2.61.0/24 Next-hop:0x31D00007 |
| Feb 16 09:50:30:110690 event:nexthop-create event_src:NHP Context:0x10027 Next-hop:0x31D00007 link-id:50003 Adjacency:0x7800003 |
| Feb 16 09:56:30:110690 event:adj-create event_src:ADJP Context:0x10027 |
| Adjacency:0x7800003 link-id:50003 encap data: [....] |
| Feb 16 09:46:30:110700 event:nexthop-update event_src:NHP Context:0x10027 Next-hop:0x31D00007 link-id:50004 Adjacency:0x7800004 |
| Feb 16 09:59:30:110850 event:nexthop-delete event_src:NHP Context:0x10027 Next-hop:0x31D00006 link-id:50002 |
| Feb 16 09:59:30:110900 event:adj-delete event_src:ADJP Context:0x10027 |
| Adjacency:0x7800002 link-id: 50002 |
| Feb 16 09:59:30:110910 route_delete event_src:OSPF Context:0x10027 AFI:IPv4 |
| IP:80.2.61.0/24 Next-hop:0x31D00007 |
| Feb 16 09:59:30:111050 event:nexthop-delete event_src:NHP Context:0x10027 Next-hop:0x31D00007 link-id:50004 |
| Feb 16 09:59:30:111100 event:adj-delete event_src:ADJP Context:0x10027 |
| Adjacency:0x7800004 link-id:50004 |

Also, the additional set of event logs have been generated by comparing the new set of event logs and the previous set of optimal event logs, where the additional set of event logs in this scenario may be, but not limited to as shown in the row 3 of **Table 8,** the additional set of evet logs in this scenario may include the addition, deletion and updation of logs with respect to the OSPF protocols. Moreover, the updated set of filters are determined based on the additional set of filters and previous set of filters. The additional set of filters are determined based on the additional set of event logs generated. Thus, the additional set of filters in this scenario may be the same CRUD filters which allows all the object lifecycle event logs, irrespective of which modules are generating the event logs. In this scenario, however the CRUD filter was already set for the RIP protocol in the previous set of filters. In the current version of the software-based system, only the additional protocol is being added which needs the same CRUD filter to determine the race condition. Thus, there is no change in the updated set of filters, it remains the same as that of the previous set of filters. Finally, the optimal set of event logs is generated upon ranking the event logs, based on the updated set of filters. The optimal set of event logs generated may be, but not limited to as shown in row 3 of **Table 9** given below, the optimal set of event logs may include the event logs related to the addition, deletion and updation of routes with respect to the OSPF protocols along with the previous set of optimal event logs.

**Table 9**

| **Ranking Parameters** |
|---|
| -New logs are ranked same as previous set of logs to be allowed as part of new minimal set. |

| **New Set of Event logs** |
|---|
| Feb 16 09:56:30:110550 event:route _add event_src:RIP Context:0x10027 AFI:IPv4 |
| IP:80.2.62.0/24 Next-hop:0x31D00006 |
| Feb 16 09:50:30:110690 event:nexthop-create event_src:NHP Context:0x10027 Next-hop:0x31D00006 link-id:50001 Adjacency:0x7800001 |
| Feb 16 09:56:30:110695 event:adj-create event_src:ADJP Context:0x10027 |
| Adjacency:0x7800001 link-id:50001 encap data: [....] |
| Feb 16 09:46:30:110700 event:nexthop-update event_src:NHP Context:0x10027 Next-hop:0x31D00006 link-id:50002 Adjacency:0x7800002 |
| Feb 16 09:56:30:110550 event:route_add event_src:OSPF Context:0x10027 AFI:Ipv4 |
| IP:80.2.61.0/24 Next-hop:0x31D00007 |
| Feb 16 09:50:30:110690 event:nexthop-create event_src:NHP Context:0x10027 Next-hop:0x31D00007 link-id:50003 Adjacency:0x7800003 |
| Feb 16 09:56:30:110690 event:adj-create event_src:ADJP Context:0x10027 |
| Adjacency:0x7800003 link-id:50003 encap data: [....] |
| Feb 16 09:46:30:110700 event:nexthop-update event_src:NHP Context:0x10027 Next-hop:0x31D00007 link-id:50004 Adjacency:0x7800004 |
| Feb 16 09:59:30:110800 event:route_delete event_src:RIP Context:0x10027 AFI:Ipv4 |
| IP:80.2.62.0/24 Next-hop:0x31D00006 |
| Feb 16 09:59:30:110850 event:nexthop-delete event_src:NHP Context:0x10027 Next-hop:0x31D00006 link-id:50002 |
| Feb 16 09:59:30:110900 event:adj-delete event_src:ADJP Context:0x10027 |
| Adjacency:0x7800002 link-id: 50002 |
| Feb 16 09:59:30:110910 event:route_delete event_src:OSPF Context:0x10027 AFI:Ipv4 |
| IP:80.2.61.0/24 Next-hop:0x31D00007 |
| Feb 16 09:59:30:111050 event:nexthop-delete event_src:NHP Context:0x10027 Next-hop:0x31D00007 link-id:50004 |
| Feb 16 09:59:30:111100 event:adj-delete event_src:ADJP Context:0x10027 Adjacency:0x7800004 link-id:50004 |

| **Optimal set of event logs after filtering after using the new set of filters.** |
|---|
| Feb 16 09:56:30:110550 event:route_add event_src:RIP Context:0x10027 AFI:Ipv4 |
| IP:80.2.62.0/24 Next-hop:0x31D00006 |
| Feb 16 09:50:30:110690 event:nexthop-create event_src:NHP Context:0x10027 Next-hop:0x31D00006 link-id:50001 Adjacency:0x7800001 |
| Feb 16 09:56:30:110695 event:adj-create event_src:ADJP Context:0x10027 |
| Adjacency:0x7800001 link-id:50001 encap data: [....] |
| Feb 16 09:46:30:110700 event:nexthop-update event_src:NHP Context:0x10027 Next-hop:0x31D00006 link-id:50002 Adjacency:0x7800002 |
| Feb 16 09:56:30:110550 event:route_add event_src:OSPF Context:0x10027 AFI:Ipv4 IP:80.2.61.0/24 Next-hop:0x31D00007 |
| Feb 16 09:50:30:110690 event:nexthop-create event_src:NHP Context:0x10027 Next-hop:0x31D00007 link-id:50003 Adjacency:0x7800003 |
| Feb 16 09:56:30:110690 event:adj-create event_src:ADJP Context:0x10027 |
| Adjacency:0x7800003 link-id:50003 encap data: [....] |
| Feb 16 09:46:30:110700 event:nexthop-update event_src:NHP Context:0x10027 Next-hop:0x31D00007 link-id:50004 Adjacency:0x7800004 |
| Feb 16 09:59:30:110800 route_delete event_src:RIP Context:0x10027 AFI:Ipv4 |
| IP:80.2.62.0/24 Next-hop:0x31D00006 |
| Feb 16 09:59:30:110850 event:nexthop-delete event_src:NHP Context:0x10027 Next-hop:0x31D00006 link-id:50002 |
| Feb 16 09:59:30:110900 event:adj-delete event_src:ADJP Context:0x10027 |
| Adjacency:0x7800002 link-id: 50002 |
| Feb 16 09:59:30:110910 evet:route_delete event_src:OSPF Context:0x10027 AFI:Ipv4 |
| IP:80.2.61.0/24 Next-hop:0x31D00007 |
| Feb 16 09:59:30:111050 event:nexthop-delete event_src:NHP Context:0x10027 Next-hop:0x31D00007 link-id:50004 |
| Feb 16 09:59:30:111100 event:adj-delete event_src:ADJP Context:0x10027 |
| Adjacency:0x7800004 link-id:50004 |

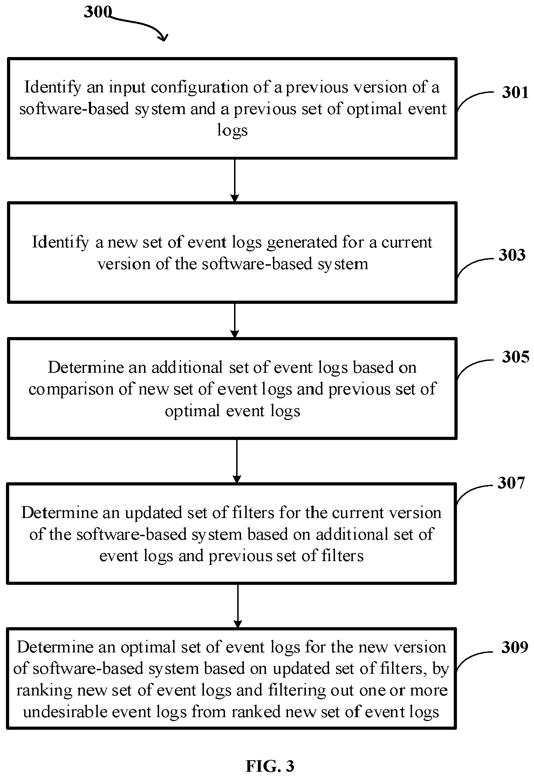

FIG. 3 shows a flowchart illustrating a method of determining an optimal set of event logs for evaluating behaviour of software-based systems during testing and debugging of incrementally developed software in accordance with some embodiments of the present disclosure.

As illustrated in FIG. 3, the method 300 includes one or more blocks illustrating a method of determining an optimal set of event logs for evaluating behaviour of software-based systems during testing and debugging of incrementally developed software. The method 300 may be described in the general context of computer executable instructions. Generally, computer executable instructions can include routines, programs, objects, components, data structures, procedures, modules, and functions, which perform functions or implement abstract data types.

The order in which the method 300 is described is not intended to be construed as a limitation, and any number of the described method blocks can be combined in any order to implement the method 300. Additionally, individual blocks may be deleted from the methods without departing from the scope of the subject matter described herein. Furthermore, the method 300 can be implemented in any suitable hardware, software, firmware, or combination thereof.

At block 301, the method 300 may include identifying, by a processor 107 of the event log filtering system 103, an input configuration of the previous version of the software-based system and a previous optimal set of event logs. Further the input configuration may include, but not limited to, the external or internal triggers and a previous set of filters.

At block 303, the method 300 may include identifying, by the processor 107, a new set of event logs generated for a current version of the software-based system based on the input configuration provided to the previous version of the software-based system. In some embodiments, the new set of event logs may be generated for the current version of the software-based system. The new set of event logs may be generated as a result of software-upgrade, feature enhancement, version change and on the like.

At block 305, the method 300 may include, determining, by the processor 107, an additional set of event logs based on comparison of the new set of event logs and the previous set of event logs. In some embodiments, the processor 107 may determine the additional set of event logs by comparing the new set of event logs and the previous set of event logs. The additional set of event logs may be the event logs which may be present in the new set of event logs, but not in the previous set of event logs and be present in the new set of event logs.

At block 307, the method 300 may include, determining, by the processor 107, an updated set of filters for the current version of the software-based system based on the additional set of event logs and the previous set of filters. For determining the updated set of filters, initially, the processor 107 may determine an additional set of filters based on the additional set of event logs. In some embodiments, to determine the additional set of filters, the processor 107 may analyse the additional set of event logs and one or more attributes associated with the additional set of event logs. Further the updated set of filters may be determined by combining the additional set of new filters and the previous set of filters, removal of the one or more filters from the previous set of filters and replacing one or more filters of the previous filter with one or more filters of the additional set of new filters.

At block 309, the method 300 may include, determining, by the processor 107, an optimal set of event logs for the new version of the software-based system based on the updated set of filters. In some embodiments, the processor 107 may determine the optimal set of event logs based on the updated set of filters. The optimal set of event logs may be determined by ranking the new set of event logs based on the system specific scenario and attributes associated with the updated set of filters. Further, the processor 107 may filter out the one or more undesirable event logs from the ranked new set of event logs based on the updated set of filters, to obtain the optimal set of event logs for the current version of the software-based system.

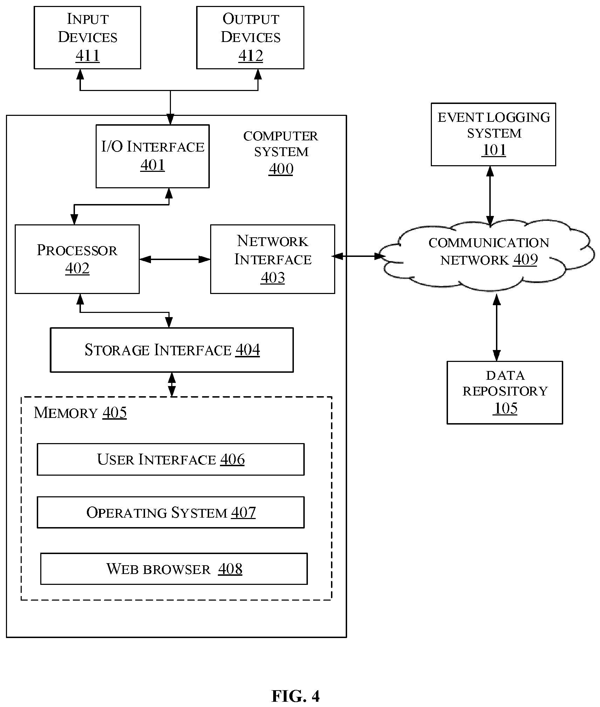

FIG. 4 is a block diagram of an exemplary computer system for implementing embodiments consistent with the present disclosure.

In some embodiments, FIG. 4 illustrates a block diagram of an exemplary computer system 400 for implementing embodiments consistent with the present invention. In some embodiments, the computer system 400 can be an event log filtering system 103 that is used for determining an optimal set of event logs for evaluating behaviour of software-based systems during testing and debugging of incrementally developed software. In some embodiments, the event-log filtering system 103 may be one of a stand-alone system, a distributed system, a networked system or a cloud-based system. In an implementation where the event log filtering system 103 may be a networked or cloud-based system, individual components communicatively connected to each other to form the event log filtering system 103 may be polled for the event logs and also may have the capability to provide the event logs as dictated by the event log filtering system 103. In another embodiment, the event log filtering system 103 may be integrated with either CI/CD systems. In yet another embodiment, the event log filtering system 103 may provide both online or offline capability for fault finding and performing corrective measures to a centralized controller associated with the event log filtering system 103. The computer system 400 may include a central processing unit ("CPU" or "processor") 402. The processor 402 may include at least one data processor for executing program components for executing user or system-generated business processes. A user may include a person, a person using a device such as those included in this invention, or such a device itself. The processor 402 may include specialized processing units such as integrated system (bus) controllers, memory management control units, floating point units, graphics processing units, digital signal processing units, etc.

The processor 402 may be disposed in communication with input devices 411 and output devices 412 via I/O interface 401. The I/O interface 401 may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface 401, computer system 400 may communicate with input devices 411 and output devices 412.

In some embodiments, the processor 402 may be disposed in communication with a communication network 409 via a network interface 403. The network interface 403 may communicate with the communication network 409. The network interface 403 may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface 403 and the communication network 409, the computer system 400 may communicate with an event logging system 101 and a data repository 105. Further, the communication network 409 can be implemented as one of the different types of networks, such as intranet or Local Area Network (LAN), Closed Area Network (CAN) and such within the autonomous vehicle. The communication network 409 may either be a dedicated network or a shared network, which represents an association of the different types of networks that use a variety of protocols, for example, Hypertext Transfer Protocol (HTTP), CAN Protocol, Transmission Control Protocol/Internet Protocol (TCP/IP), Wireless Application Protocol (WAP), etc., to communicate with each other. Further, the communication network 409 may include a variety of network devices, including routers, bridges, servers, computing devices, storage devices, etc. In some embodiments, the processor 402 may be disposed in communication with a memory 405 (e.g., RAM, ROM, etc. not shown in FIG. 4) via a storage interface 404. The storage interface 404 may connect to memory 405 including, without limitation, memory drives, removable disc drives, etc., employing connection protocols such as Serial Advanced Technology Attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 405 may store a collection of program or database components, including, without limitation, a user interface 406, an operating system 407, a web browser 408 etc. In some embodiments, the computer system 400 may store user/application data, such as the data, variables, records, etc. as described in this invention. Such databases may be implemented as fault-tolerant, relational, scalable, secure databases such as Oracle or Sybase.

The operating system 407 may facilitate resource management and operation of the computer system 400. Examples of operating systems include, without limitation, APPLE^{®} MACINTOSH^{®} OS X^{®}, UNIX^{®}, UNIX-like system distributions (E.G., BERKELEY SOFTWARE DISTRIBUTION^{®} (BSD), FREEBSD^{®}, NETBSD^{®}, OPENBSD, etc.), LINUX^{®} DISTRIBUTIONS (E.G., RED HAT^{®}, UBUNTU^{®}, KUBUNTU^{®}, etc.), IBM^{®}OS/2^{®}, MICROSOFT^{®} WINDOWS^{®} (XP^{®}, VISTA^{®}/7/8, 10 etc.), APPLE^{®} IOS^{®}, GOOGLETM ANDROIDTM, BLACKBERRY^{®} OS, or the like. The User interface 406 may facilitate display, execution, interaction, manipulation, or operation of program components through textual or graphical facilities. For example, user interfaces may provide computer interaction interface elements on a display system operatively connected to the computer system 400, such as cursors, icons, checkboxes, menus, scrollers, windows, widgets, etc. Graphical User Interfaces (GUIs) may be employed, including, without limitation, Apple^{®} Macintosh^{®} operating systems' Aqua^{®}, IBM^{®} OS/2^{®}, Microsoft^{®} Windows^{®} (e.g., Aero, Metro, etc.), web interface libraries (e.g., ActiveX^{®}, Java^{®}, Javascript^{®}, AJAX, HTML, Adobe^{®} Flash^{®}, etc.), or the like.

In some embodiments, the computer system 400 may implement the web browser 408 stored program components. The web browser 408 may be a hypertext viewing application, such as MICROSOFT^{®} INTERNET EXPLORER^{®}, GOOGLETM CHROMETM, MOZILLA^{®} FIREFOX^{®}, APPLE^{®} SAFARI^{®}, etc. Secure web browsing may be provided using Secure Hypertext Transport Protocol (HTTPS), Secure Sockets Layer (SSL), Transport Layer Security (TLS), etc. Web browsers 408 may utilize facilities such as AJAX, DHTML, ADOBE^{®} FLASH^{®}, JAVASCRIPT^{®}, JAVA^{®}, Application Programming Interfaces (APIs), etc. In some embodiments, the computer system 400 may implement a mail server stored program component. The mail server may be an Internet mail server such as Microsoft Exchange, or the like. The mail server may utilize facilities such as Active Server Pages (ASP), ACTIVEX^{®}, ANSI^{®} C++/C#, MICROSOFT^{®}, .NET, CGI SCRIPTS, JAVA^{®}, JAVASCRIPT^{®}, PERL^{®}, PHP, PYTHON^{®}, WEBOBJECTS^{®}, etc. The mail server may utilize communication protocols such as Internet Message Access Protocol (IMAP), Messaging Application Programming Interface (MAPI), MICROSOFT^{®} exchange, Post Office Protocol (POP), Simple Mail Transfer Protocol (SMTP), or the like. In some embodiments, the computer system 400 may implement a mail client stored program component. The mail client may be a mail viewing application, such as APPLE^{®} MAIL, MICROSOFT^{®} ENTOURAGE^{®}, MICROSOFT^{®} OUTLOOK^{®}, MOZILLA^{®} THUNDERBIRD^{®}, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

The present disclosure provides a method and a system for determining an optimal set of event logs for evaluating behaviour of software-based systems during testing and debugging of incrementally developed software.

The present disclosure performs computation for non-uniform logging mechanism. The event log filtering system 103 of the present disclosure processes the logs and filters the unwanted event logs and suggests the correction. The unstructured logs suffer from limitations, as there is no mechanism to check if the added log is intentionally misleading or is because of ignorance of the developer due too sheer volume of such logs during the debugging. However, the event log filtering system 103 of the present disclosure tracks the unstructured logs and enhances the unstructured logs by a filtering mechanism to reach the equivalence of the structured logs.

In the present disclosure, the event log filtering system 103 is able to filter high volume of event logs. Usually, event logs collected are very large in number and time consuming to analyse. Event logging also requires special skill, deep understanding of the software, to decode them based on the type of the event logs. However, the event log filtering system 103 of the present disclosure performs an automated analysis and optimizes the amount of unstructured logs in the software-based system, which in turn eliminates the need for intervention of subject matter experts during event logging process.

In the present disclosure, the event log filtering system 103 reduces the error recovery and the turnaround time. Apart from undefined structure of the event logs, most of the time the event logs collected may not be sufficient requiring iterative steps of re-collecting more event logs, analyzing and requiring furthermore logs to resolve the issue. This leads to longer turnaround time to fix an issue during the software debugging process. The optimal set of event logs determined for each scenario of the software-based system in the present disclosure ensures optimal logging system which helps a developer to quickly resolve the issues.

In the present disclosure, the event log filtering system 103 may determine a pattern validation of the set of event logs by creating a pattern as an optimal set for describing the behaviour of the system-software. The logs could be unstructured or insufficient due to system capability to log all the events because of system load or unavailability of any event logging code, or even redundant or erroneous logging present in the system event logging. Currently most of the systems do not provide any mechanism to validate or verify the logging. However, the event log filtering system 103 of the present disclosure validate the event logs for each scenario of the software-based system. Since, the event logs for each scenario are validated and optimal set of event logs are determined, the present disclosure provides enables using the optimal set of event logs as the quantifiable measure to check the credibility and quality of the software-based system while comparing different software based systems.

In the present disclosure, the event log filtering system 103 provides an automated analysis of event logs. Automated analysis of such event logs, though suggested in many prior arts suffers heavily or sometime is not possible due to non-uniform logging or unverified or invalidated logging in the software. In the present disclosure, the data repository may be associated with an Artificial Intelligence or Machine learning (AI/ML) engine to perform the analytics on the event logs and provide the feedback to event log filter system, thereby creating and learning the filters in the system automatically.

In the present disclosure, the event log filtering system 103 identifies the upper and lower bounds of logs. The logging provided by the event log filtering system 103 is taken as lower bound for the present disclosure and use this capability of system for getting minimal set of logs for combination of external and internal event. This bounded sets can be derived from various testing stages like Unit Test, Integration Test, Systems Test, Scale Test, limited deployment customer labs and so on. Event logging for replication of database, system redundancy & instruction trace are some of the examples of maximum logging, while some of the lower bounds are structured logging for monitoring and alarm generation. Unstructured logging has no well-defined lower bounds. The present disclosure suggests how to get a optimal event log set to define the behaviour of software.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The specification has described a method and a system for determining an optimal set of event logs for evaluating behaviour of software-based systems during testing and debugging of incrementally developed software. The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open-ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

## Claims

1. A method of determining an optimal set of event logs for evaluating behaviour of software-based systems during testing and debugging of incrementally developed software, the method comprising:
identifying, by an event log filtering system, an input configuration of a previous version of a software-based system and a previous set of optimal event logs of the previous version of the software-based system, wherein the input configuration comprises external/internal event triggers and a previous set of filters;
identifying, by the event log filtering system, a new set of event logs generated for a current version of the software-based system based on the input configuration provided to the previous version of software-based system;
determining, by the event log filtering system, an additional set of event logs based on comparison of the new set of event logs and the previous set of optimal event logs;
determining, by the event log filtering system, an updated set of filters for the current version of the software-based system based on the additional set of event logs and the previous set of filters; and
determining, by the event log filtering system, an optimal set of event logs for the new version of the software-based system based on the updated set of filters for evaluating behaviour of the current version of the software-based system.

2. The method as claimed in claim 1, wherein determining the optimal set of event logs for the current version of the software-based system comprises:
ranking the new set of event logs based on at least one of a system specific scenario and attributes associated with the updated set of filters; and
filtering one or more undesirable event logs from the ranked new set of event logs based on the updated set of filters to determine the optimal set of event logs, wherein the one or more undesirable event logs comprises at least one of irrelevant, redundant, erroneous, incomplete, misleading, and spurious event logs.

3. The method as claimed in claim 1 or claim 2, wherein determining the updated set of filters for the current version of the software-based system comprises:
determining an additional set of new filters by analysing the additional set of event logs and one or more attributes associated with the additional set of event logs; and
determining the updated set of filters for the current version of the software-based system by at least one of combining the additional set of new filters and the previous set of filters, removal of one or more filters from the previous set of filters, or replacing one or more filters of the previous set of filters with one or more filters of the additional set of new filters.

4. The method as claimed in any of claims 1 to 3, further comprising: performing, by the event log filtering system, a self-learning process based on at least one of results of the analysis, the optimal set of event logs and user input, wherein self-learning further comprises training a machine learning model to perform analytics on at least one of the new set of event logs or the additional set of event logs for determining an updated set of filters for the current version of the software-based system.

5. The method as claimed in any of claims 1 to 4, wherein the previous set of filters, additional set of filters and updated set of filters are at least one of API based filters, object life cycle filters, process life cycle filters, platform specific or platform independent filters, client/server filters, service level filters, time based filters, scale filters, maskable filters, program code specific filters and test case based filters.

6. An event log filtering system for determining an optimal set of event logs for evaluating behaviour of software-based systems during testing and debugging of incrementally developed software, the system comprises:
a processor; and
a memory communicatively coupled to the processor, wherein the memory stores processor-executable instructions, which, on execution, cause the processor to:
identify an input configuration of a previous version of a software-based system and a previous set of optimal event logs of the previous version of the software-based system, wherein the input configuration comprises external/internal event triggers and a previous set of filters;
identify a new set of event logs generated for a current version of the software-based system based on the input configuration provided to the previous version of software-based system;
determine an additional set of event logs based on comparison of the new set of event logs and the previous set of optimal event logs;
determine an updated set of filters for the current version of the software-based system based on the additional set of event logs and the previous set of filters; and
determine an optimal set of event logs for the new version of the software-based system based on the updated set of filters for evaluating behaviour of the current version of the software-based system.

7. The event log filtering system as claimed in claim 6, wherein to determine the optimal set of event logs for the current version of the software-based system, the processor is configured to:
rank the new set of event logs based on at least one of a system specific scenario and attributes associated with the updated set of filters; and
filter one or more undesirable event logs from the ranked new set of event logs based on the updated set of filters to determine the optimal set of event logs, wherein the one or more undesirable event logs comprises at least one of irrelevant, redundant, erroneous, incomplete, misleading, and spurious event logs.

8. The event log filtering system as claimed in claim 6 or claim 7, wherein to determine the updated set of filters for the current version of the software-based system, the processor is configured to:
determine an additional set of new filters by analysing the additional set of event logs and one or more attributes associated with the additional set of event logs; and
determine the updated set of filters for the current version of the software-based system by at least one of combining the additional set of new filters and the previous set of filters, removal of one or more filters from the previous set of filters, or replacing one or more filters of the previous set of filters with one or more filters of the additional set of new filters.

9. The event log filtering system as claimed in any of claims 6 to 8, wherein the processor is further configured to perform a self-learning process based on at least one of results of the analysis, the optimal set of event logs and user input, wherein for self-learning, the processor trains a machine learning model to perform analytics on at least one of the new set of event logs or the additional set of event logs for determining an updated set of filters for the current version of the software-based system.

10. The event log filtering system as claimed in any of claims 6 to 9, wherein the previous set of filters, additional set of filters and updated set of filters are at least one of API based filters, object life cycle filters, process life cycle filters, platform specific or platform independent filters, client/server filters, service level filters, time based filters, scale filters, maskable filters, program code specific filters and test case based filters.

11. A computer readable medium including instructions stored thereon that when processed by at least one processor cause an event log filtering system to perform the method as claimed in any of claims 1 to 5.
